# EUROPÄISCHE PATENTSCHRIFT

(11) **EP 1 736 442 B1**
(45) Veröffentlichungstag und Bekanntmachung des Hinweises auf die Patenterteilung: **12.09.2018**
(21) Anmeldenummer: 06008247.6
(22) Anmeldetag: 21.04.2006
(51) Int. Cl.: C02F 1/46, F24F 6/00, F24F 6/04, F24F 6/16, F24F 3/12

(54) **Vorrichtung zur Luftaufbereitung sowie Oberflächenbehandlungsanlage mit derselben**
Air treatment device and surface-treatment plant with such an air treatment device
Dispositif pour le traitement de l'air et installation de traitement de surface comportant un tel dispositif

(30) Priorität: 23.06.2005 DE 102005029148
(43) Veröffentlichungstag der Anmeldung: 27.12.2006
(73) Patentinhaber: Eisenmann SE, 71032 Böblingen (DE)
(72) Erfinder: Swoboda, Werner, 71032 Böblingen (DE); Link, Kersten, 71120 Grafenau (DE)
(74) Vertreter: Ostertag & Partner Patentanwälte mbB

(56) Entgegenhaltungen:
- WO-A-00/09957
- DE-C1- 10 144 486
- JP-A- 1 169 252
- US-A- 4 663 091
- US-A1- 2004 005 260

## Beschreibung

Die Erfindung betrifft eine Vorrichtung zur Luftaufbereitung mit
a) wenigstens einem mit einer Flüssigkeit befüllbaren Reservoir;
b) einer Luftfördereinrichtung; und
c) einer Kontakteinrichtung, welche dafür sorgt, dass aufzubereitende Luft zu deren Aufbereitung mit der Flüssigkeit in Kontakt kommt.

Außerdem betrifft die Erfindung eine Oberflächenbehandlungsanlage, insbesondere zum Lackieren, Beschichten, Trocknen und damit verbundenem Vorbereiten von metallischen oder nichtmetallischen Gegenständen, mit wenigstens einer Behandlungskabine, bei welcher mit Verunreinigungen belastete Abluft anfällt, die der Behandlungskabine in einem Kreislauf nach vorheriger Aufbereitung wenigstens teilweise wieder zugeführt wird.

Vorrichtungen zur Luftaufbereitung der oben genannten Art sind allgemein im Stand der Technik bekannt, wobei zwischen Luftbefeuchtern und Luftreinigern unterschieden wird.

Bei Luftbefeuchtern haben sich drei Funktionsprinzipien etabliert.

In sogenannten Verdampfern wird in dem Reservoir befindliches Wasser zum Sieden erhitzt und der dadurch enstehende Wasserdampf an die Umgebungsluft abgegeben. Bei sogenannten Verdunstern wird Wasser auf einer möglichst großen Oberfläche verteilt, über die dann mittels eines Gebläses ein Luftstrom geführt wird. Die Verdunstungsfeuchte wird von diesem aufgenommen und der Umgebung zugeführt. Schließlich sind noch Luftbefeuchter bekannt, die nach dem Zerstäuberprinzip arbeiten. Bei diesen wird das Wasser zerstäubt bzw. vernebelt, was beispielsweise durch mechanische Verwirbelung, Ultraschall oder mittels feiner Düsen erfolgen kann.

Diesen nach unterschiedlichen Prinzipien arbeitenden Luftbefeuchtern ist gemeinsam, dass die Flüssigkeit gegebenenfalls recht lange in dem Reservoir verweilt. Wenn dies der Fall ist, können sich in der Flüssigkeit Keime vermehren. Unter Keimen werden im vorliegenden Zusammenhang neben Bakterien und anderen Einzellern auch Pilze und Algen verstanden.

Bei ungehemmter Vermehrung können derartige Keime zu Geruchsbelästigungen und ernsten gesundheitlichen Beeinträchtigungen von Personen führen, welche die befeuchtete Luft einatmen oder auch nur in Kontakt damit kommen.

Da sich relativ schnell hohe Keimkonzentrationen von mehr als 10⁸ Keimen pro cm³ einstellen können, mischt man den Flüssigkeiten zur Sterilisation häufig Biozide ein, worunter man Bakterizide und Fungizide versteht.

Durch solche bioaktiv toxischen Substanzen lassen sich zwar die Keimkonzentrationen relativ gering halten, jedoch sind die Kosten für diese Art der Entkeimung hoch. Außerdem stellen die Biozide Zusatzstoffe dar, die von Benutzern solcher Luftbefeuchter häufig als störend im Sinne einer unnötigen Gesundheits- und/oder Umweltbelastung empfunden werden. Ein weiteres Problem beim Einsatz von chemisch-biologisch wirkenden Bioziden ist die Fähigkeit zahlreicher Keime, resistente Stämme zu entwickeln, die - wenn überhaupt - nur mit neuartigen und deswegen besonders kostspieligen Mitteln wirksam bekämpft werden können.

Ein Luftbefeuchter, der nach dem Verdampferprinzip arbeitet, hat zwar den Vorteil, dass das Wasser durch Erhitzen sterilisiert wird, da gegebenenfalls im Wasser befindliche Keime normalerweise auf Grund der zur Verdampfung des Wassers nötigen hohen Temperatur abgetötet werden. Ein solcher Verdampfer hat jedoch einen hohen Energieverbrauch, was aus wirtschaftlicher Sicht nachteilig ist.

Wie eingangs erwähnt, besteht ein andere Art der Luftaufbereitung in der Luftreinigung. Dabei wird mit Verunreinigungen belastete Luft durch Wasser oder eine andere geeignete Reinigungsflüssigkeit geleitet, in der sich die Verunreinigungen gut lösen. Die so gereinigte Luft wird dann wieder mittels eines Gebläses der Umgebung zugeführt. Gerade im Fall eines solchen Luftreinigers kann es zu einer starken Verkeimung der verwendeten Flüssigkeit kommen, da die Flüssigkeit über ihren Verwendungszeitraum hinweg immer stärker durch Verunreinigungen kontaminiert wird und damit einen guten Nährboden für Keime bietet.

Der maximale Verwendungszeitraum einer Flüssigkeit bei einem Luftreiniger ergibt sich aus ihrer maximalen Aufnahmekapazität hinsichtlich der aufzunehmenden Verunreinigungen. Auf Grund der durch die Kontamination der Flüssigkeit begünstigten Verkeimung ist jedoch ein Austausch der Flüssigkeit meist schon vor dem Ende ihrer maximalen Verwendungszeit geboten.

Die Aufbereitung/Reinigung von Abluft ist insbesondere im Zusammenhang mit Oberflächenbehandlungsanlagen interessant, bei denen es zu einer Nassabscheidung kommt, wie dies beispielsweise in Behandlungskabinen von Oberflächenbehandlungsanlagen der eingangs genannten Art der Fall sein kann.

Die aus einer solchen Behandlungskabine abgeführte Abluft ist mit aus der Nassabscheidung resultierenden Verunreinigungen kontaminiert. Heutzutage wird sowohl aus ökologischen als auch aus ökonomischen Gründen viel Wert darauf gelegt, einen möglichst großen Teil der in der Behandlungskabine erzeugten Abluft in einem Kreislauf zu reinigen und erneut zu verwenden. Daher ist es wünschenswert, eine Oberflächenbehandlungsanlage zu schaffen, bei der ein wirtschaftlich tragbarer Weg gefunden ist, Abluft zu deren Wiederverwertung aufzubereiten.

Die Druckschrift US 2004/005260 A1 beschreibt eine Luftbefeuchtungseinrichtung mit einem Wassertank, durch welchen ein darunter angeordneter Behälter über eine Leitung nach dem Prinzip einer Vogeltränke mit Wasser befüllt wird. Über eine Öffnung im Boden des Behälters wird aus letzterem Wasser entnommen und mittels einer Pumpe über eine Leitung zu einer Verdunstungsmatter gefördert, die im oberen Bereich einer Verdunstungskammer angeordnet ist.

Die Druckschrift JP 01 169252 A betrifft einen Luftbefeuchter, bei dem Wasser aus einem Wassertank mit Hilfe eines Ultraschall-Generators vernebelt und über eine oberhalb des Wassertanks angeordnete Vernebelungskammer und einen Auslass in einen zu befeuchtenden Raum abgegeben wird.

Vor dem oben erörterten Hintergrund ist es Aufgabe der Erfindung, eine Vorrichtung zur Luftaufbereitung der eingangs genannten Art zu schaffen, bei welcher einfach und kostengünstig eine Verringerung der Keimkonzentration in der verwendeten Flüssigkeit erzielt werden kann.

Diese Aufgabe wird dadurch gelöst, dass
d) eine Umwälzeinrichtung vorgesehen ist, durch welche Flüssigkeit in dem Reservoir in einen Kreislauf aus dem Reservoir heraus und wieder in dieses hinein förderbar ist; und
e) in dem Kreislauf zum Zwecke der Entkeimung der Flüssigkeit eine Einrichtung zum mechanisch-physikalischen Öffnen von Zellmembranen vorgesehen ist.

Die Keime werden somit nicht chemisch-biologisch abgetötet, sondern mechanisch derart beansprucht, dass sich die Zellmembranen irreversibel öffnen. Dadurch tritt das Zytoplasma aus den Zellen aus, was zu deren Absterben führt. Diese Art von Entkeimung hat den Vorteil, dass - abgesehen von dem getöteten biologischen Material - keine Rückstände in der Flüssigkeit verbleiben, wie dies bei deren Behandlung mit Bioziden der Fall ist. Ferner lässt sich eine solche mechanische Zerstörung der Keime vergleichsweise kostengünstig und effizient durchführen. Ein weiterer Vorteil dieses Ansatzes besteht darin, dass sich die Keime nicht durch Erzeugung resistenter Stämme der mechanisch-physikalischen Sterilisation entziehen können, wie dies bei der chemisch-biologischen Sterilisation mit Hilfe von Bioziden möglich ist.

Schließlich funktioniert die mechanische Öffnung von Zellmembranen zum Zwecke der Entkeimung auch dann, wenn die Flüssigkeit trübe ist oder stark absorbierende Pigmente enthält, wie es bei espeziellen Reinigungsflüssigkeiten vorkommen kann. Dies ist ein bedeutender Vorteil gegenüber der Bestrahlung mit kurzwelliger elektromagnetischer Strahlung, zum Beispiel UV-Licht, die bislang ebenfalls zur Entkeimung eingesetzt wird.

Bei der Einrichtung zum mechanischen Öffnen von Zellmembranen kann es sich beispielsweise um eine Elektroporationseinrichtung handeln. Der Begriff "Elektroporation" bezeichnet ein Verfahren, bei dem die Zellen kurzzeitig starken elektrischen Feldern ausgesetzt werden. Feinste Poren, die in der Zellmembran bereits vorhanden sind, werden unter dem Einfluss des elektrischen Felds derart aufgeweitet, dass sie sich auch nach Abklingen des elektrischen Feldes nicht wieder schließen. Voraussetzung hierfür ist lediglich, dass das elektrische Feld eine ausreichende Feldstärke hat und über eine gewisse Mindestdauer hinweg besteht.

Diese Art der Abtötung biologischer Zellen ist an und für sich bekannt aus einem Aufsatz von H. Bluhm et al. mit dem Titel "Aufschluss und Abtötung biologischer Zellen mit Hilfe starker gepulster elektrischer Felder", Nachrichten-Forschungszentrum Karlsruhe, Jahrgang 35, 3/2003, Seiten 105 bis 110. Im Vordergrund bei der Sterilisation steht bislang die Reinigung von Abwässern aus Kläranlagen, wie dies beispielsweise in der US 2002/0144957 A1 beschrieben ist. Allerdings ist die Abtötung von Bakterien und anderen Mikroorganismen durch Elektroporation schwieriger als die Öffnung pflanzlicher Zellen, wie sie beispielsweise in industriellen Entsaftern eingesetzt wird.

Durch die Umwälzeinrichtung wird gewährleistet, dass die in dem Reservoir befindliche Flüssigkeit umgewälzt und somit kontinuierlich oder in regelmäßigen zeitlichen Abständen einer Elektroporation unterzogen werden kann, was für eine hinreichend wirksame Entkeimung wichtig ist.

Auf Grund verschiedener möglicher Einsatzgebiete der Vorrichtung zur Luftaufbereitung ist es günstig, wenn die Betriebsparameter der Elektroporationseinrichtung während des Betriebs der Vorrichtung einstellbar sind. Die bei der Elektroporation wählbaren Parameter, wie Impulsamplitude, Impulsdauer, Impulsfrequenz sowie Impulsform, beeinflussen die Effizienz der Keimabtötung und sind an die jeweiligen Verhältnisse anpassbar, z.B. daran, ob Wasser oder eine Reinigungsflüssigkeit verwendet wird und/ oder an den Grad der Verunreinigung. Da die Flüssigkeit durch die Umwälzeinrichtung kontinuierlich oder intermittierend umgewälzt wird, besteht die Möglichkeit, einen oder mehrere dieser Parameter während der Betriebsdauer der Vorrichtung zu verändern. Dadurch können auch ganz unterschiedliche Keime abgetötet werden.

Insbesondere ist es hilfreich, wenn in der Elektroporationseinrichtung Koronarentladungen erzeugbar sind.

Bei einer alternativen Ausgestaltung ist die Einrichtung zum mechanisch-physikalischen Öffnen von Zellmembranen eine Kavitationseinrichtung, welche die Flüssigkeit derart beschleunigt, dass durch Kavitation hervorgerufene Druckstöße die Zellmembranen öffnen. Bei einer Kavitationseinrichtung wird die Flüssigkeit zum Beispiel im Bereich einer Leitungsengstelle oder mit Hilfe eines Flügelrades o. ä. stark beschleunigt. In Folge der starken Beschleunigung entstehen Gasblasen in der Flüssigkeit, die wiederum beim Kondensieren starke Druckstöße erzeugen. Diese Druckstöße öffnen zumindest teilweise die Zellmembranen der Keime, wodurch ein ähnlicher Effekt wie in der Elektroporationseinrichtung erzielt wird.

Baulich einfach umzusetzen ist es, wenn die Kontakteinrichtung, welche dafür sorgt, dass die aufzubereitende Luft zu deren Aufbereitung mit wenigstens einem Teil der Flüssigkeit in Kontakt kommt, durch eine Verdunstungsfläche gebildet ist. Dies ist leicht dadurch zu erreichen, dass die Verdunstungsfläche eine teilweise in die Flüssigkeit im Reservoir tauchende Vlies- oder Filtermatte ist.

Eine andere Möglichkeit besteht darin, eine Zerstäubereinrichtung einzusetzten, welche einen Teil der Flüssigkeit im Reservoir zerstäubt.

Dies kann mechanisch einfach durch eine vorzugsweise am Flüssigkeitsspiegel rotierende Zerstäuberplatte geschehen. Alternativ kann die Flüssigkeit mittels Ultraschall oder durch den Einsatz von Düsen, durch welche die Flüssigkeit mittels einer Pumpe gepresst wird, zerstäubt werden.

Eine andere Möglichkeit zur Luftaufbereitung besteht darin, aufzubereitende Luft mittels einer Luftzuführeinrichtung in der Nähe des Bodens des Reservoirs in die Flüssigkeit im Reservoir einzubringen. In diesem Fall wird die Luft beim Durchtritt durch die Flüssigkeit gereinigt, indem in der Luft mitgeführte Verunreinigungen von der Flüssigkeit aufgenommen werden.

Eine weitere Möglichkeit zur Luftreinigung besteht darin, aufzubereitende Luft mit der Flüssigkeit in gleicher Fließrichtung durch eine Düse zu führen.

Eine gute Reinigungswirkung wird erzielt, wenn die Luftzuführeinrichtung eine Vielzahl von am Boden des Reservoirs angeordnete Düsen umfasst.

Es ist außerdem Aufgabe der vorliegenden Erfindung, eine Oberflächenbehandlungsanlage der eingangs genannten Art zu schaffen, bei welcher entstehende Abluft einfach und kostengünstig gereinigt werden kann.

Dies wird durch eine Oberflächenbehandlungsanlage der eingangs genannten Art erreicht, bei der in dem Kreislauf eine Vorrichtung zur Luftaufbereitung im Sinne einer Luftreinigung vorgesehen ist.

Nachstehend werden Ausführungsbeispiele der Erfindung anhand der Zeichnung näher erläutert. In dieser zeigen:
- Figur 1:: ein erstes Ausführungsbeispiel einer Vorrichtung zur Luftaufbereitung im teilweisen Schnitt;
- Figur 2:: ein zweites Ausführungsbeispiel einer Vorrichtung zur Luftaufbereitung im teilweisen Schnitt;
- Figur 3:: ein drittes Ausführungsbeispiel einer Vorrichtung zur Luftaufbereitung im teilweisen Schnitt;
- Figur 4:: schematisch eine Oberflächenbehandlungsanlage mit einer Vorrichtung zur Luftaufbereitung; und
- Figur 5:: einen vereinfachten Querschnitt durch eine Elektroporationseinrichtung, in der eine Koronarentladung erzeugbar ist.

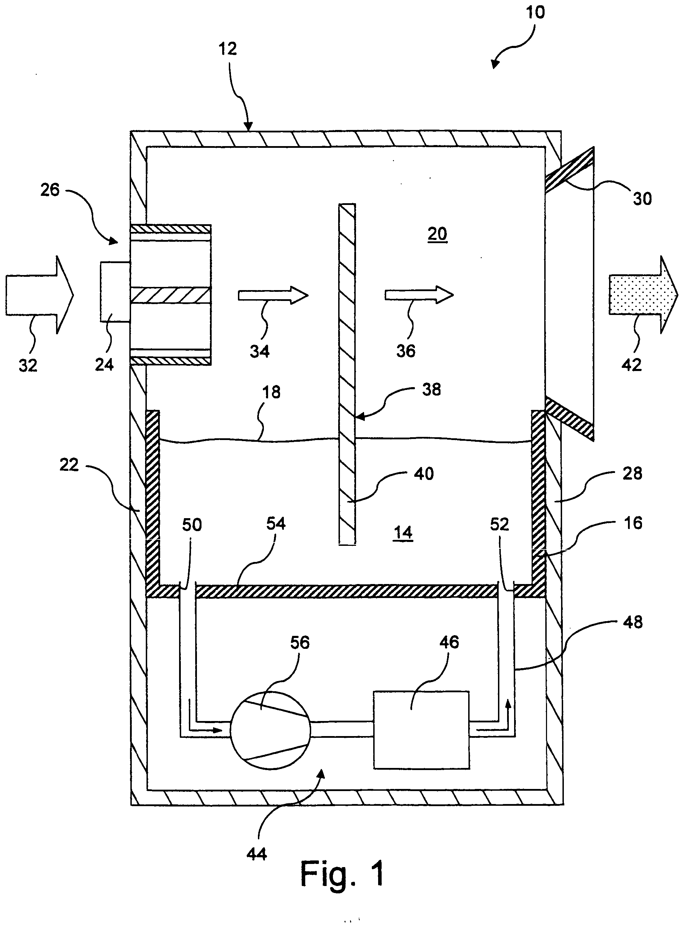

Figur 1 zeigt einen Luftbefeuchter 10 als erstes Ausführungsbeispiel einer Vorrichtung zur Luftaufbereitung. Der Luftbefeuchter 10 umfasst ein Gehäuse 12, in dem ein mit Wasser 14 gefülltes Reservoir 16 derart angeordnet ist, dass über dem Flüssigkeitsspiegel 18 des Wassers 14 ein Gasraum 20 verbleibt. Nicht dargestellt sind ggf. eine vorhandene Zuleitung zum Befüllen des Reservoirs 16 sowie ein Sicherheitsüberlauf.

Oberhalb des Flüssigkeitsspiegels 18 ist in einer Wand 22 des Gehäuses 12 ein mittels eines Elektromotors 24 angetriebenes Gebläse 26 angeordnet, über das der Gasraum 20 mit der außerhalb des Gehäuses liegenden Umgebung verbunden ist.

Die dem Gebläse 26 gegenüberliegende Wand 28 des Gehäuses 12 weist oberhalb des Flüssigkeitsspiegels 18 des Wassers 14 eine Öffnung 30 auf.

Das Gebläse 26 ist so konfiguriert, dass außerhalb des Gehäuses 12 befindliche Luft, welche durch den Pfeil 32 angedeutet ist, in den Gasraum 20 und durch diesen hindurch zur Öffnung 30 gefördert wird.

In dem durch die Pfeile 34 und 36 angedeuteten Strömungsweg der Luft durch den Gasraum 20 des Gehäuses 12 hindurch befindet sich eine Verdunstungsfläche 38 in Form einer Vlies- oder Filtermatte, deren unterer Endbereich 40 in das Wasser 14 eintaucht. Das Wasser 14 verteilt sich durch Kapillarkräfte innerhalb der Filtermatte 38. Die durch den Gasraum 20 des Gehäuses 12 hindurchgeförderte Luft nimmt beim Durchtritt durch die Filtermatte 38 Wasserdampf auf und verlässt befeuchtet das Gehäuse 12 durch die Öffnung 30, was in Figur 1 durch einen Pfeil 42 angedeutet ist.

Zwar wird beim Betrieb des Luftbefeuchters 10 ständig Wasser 14 aus dem Reservoir 16 entnommen. Dennoch ist die Verweildauer des Wassers 14 in dem Reservoir 16 relativ hoch, so dass die Gefahr einer Verkeimung des Wassers 14 besteht.

Um diese Gefahr zu verringern, ist zum Zwecke der Entkeimung des Wassers 14 eine Umwälzeinrichtung 44 vorgesehen, in die eine Elektroporationseinrichtung 46 integriert ist.

Die Umwälzeinrichtung 44 umfasst eine Fluidleitung 48, die einen Auslass 50 und einen Einlass 52 im Boden 54 des Reservoirs 16 miteinander verbindet. Im Strömungsweg des Wassers 14 durch die Leitung 48 ist eine Förderpumpe 56 vorgesehen. Die Elektroporationseinrichtung 46 befindet sich in diesem Strömungsweg zwischen der Pumpe 56 und dem Einlass 52. Die Elektroporationseinrichtung 46 kann jedoch auch an anderer Stelle, zum Beispiel in Fließrichtung vor der Pumpe 56 oder in einer, gegebenenfalls eigens hierfür vorgesehenen, Bypassleitung angeordnet sein.

Zum hier gewünschten Zweck geeignete Elektroporationseinrichtungen sind an sich aus dem Stand der Technik bekannt. In diesem Zusammenhang wird auf den eingangs erwähnten Aufsatz von H. Bluhm et al. sowie auf die DE 101 44 486 C1 verwiesen. Die bei der Elektroporation wählbaren Parameter, wie Impulsamplitude, Impulsdauer, Impulsfrequenz sowie Impulsform, beeinflussen die Effizienz der Keimabtötung und sind an die jeweiligen Verhältnisse anzupassen.

Das Wasser sollte kontinuierlich oder in regelmäßigen Intervallen mit der Umwälzeinrichtung 44 umgewälzt werden. Dabei besteht die Möglichkeit, einen oder mehrere dieser Parameter während des Betriebs des Luftbefeuchters zu verändern, wodurch unterschiedliche Keime abgetötet werden können.

In Folge der Elektroporation kann die Keimdichte des umgewälzten Wassers 14 um mehrere Größenordnung so weit verringert werden, dass keine Gesundheitsgefährdungen zu erwarten sind.

Anstelle der Elektroporationseinrichtung 46 kann auch eine Kavitationseinrichtung vorgesehen sein, in der das Wasser 14 zum Beispiel im Bereich einer Leitungsengstelle oder mit Hilfe eines Flügelrads oder ähnlichem stark beschleunigt wird. In Folge der starken Beschleunigung entstehen Gasblasen im Wasser 14, die wiederum beim Kondensieren starke Druckstöße erzeugen. Diese Druckstöße öffnen zumindest teilweise die Zellmembranen der Keime, wodurch ein ähnlicher Effekt wie in der Elektroporationseinrichtung 46 erzielt wird.

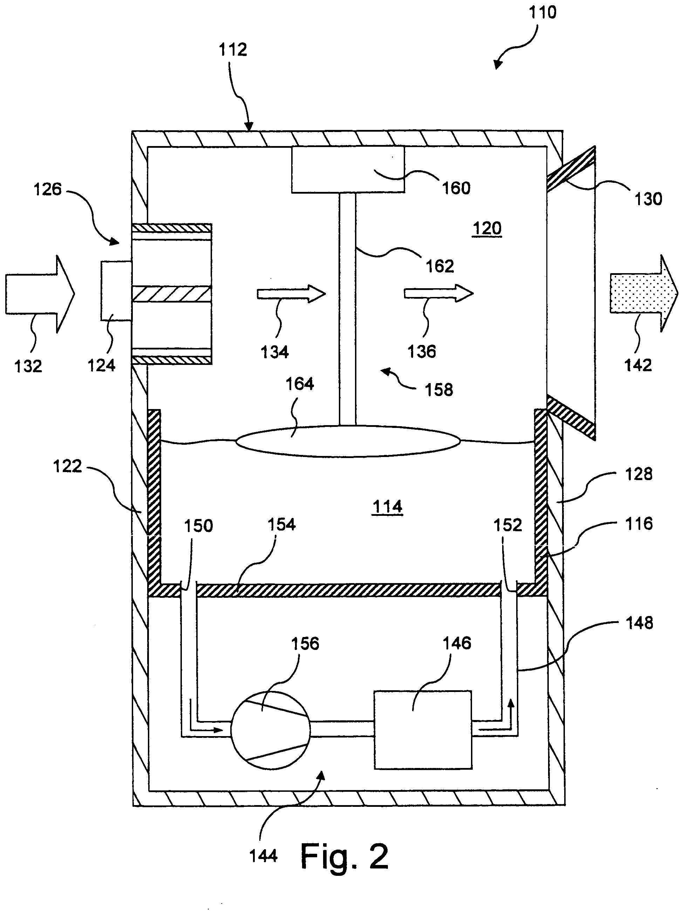

Figur 2 zeigt ein zweites Ausführungsbeispiel einer Vorrichtung zur Luftaufbereitung in Form eines Luftbefeuchters 110. In Figur 2 sind der Figur 1 entsprechende Komponenten mit denselben Bezugszeichen zuzüglich 100 gekennzeichnet.

Der Luftbefeuchter 110 unterscheidet sich von dem Luftbefeuchter 10 in Figur 1 lediglich durch die Einrichtung, welche dafür sorgt, dass die Luft zu deren Aufbereitung mit dem Wasser in Kontakt kommt. Bei dem Ausführungsbeispiel in Figur 1 ist dies durch die Verdunstungsfläche 38 gewährleistet.

Bei dem in Figur 2 gezeigten Luftbefeuchter 110 kommt hierzu eine Zerstäubereinrichtung 158 zum Einsatz. Diese umfasst eine von einem Elektromotor 160 angetriebene Drehwelle 162, die eine im Bereich des Wasserspiegels 118 angeordnete Zerstäuberplatte 164 antreibt.

Die Zerstäuberplatte 164 ist derart gestaltet, dass bei ihrer Rotation das Wasser 114 im Reservoir 116 fein vernebelt und in den Gasraum 120 des Gehäuses 112 gesprüht wird. Die durch den Gasraum 120 strömende Luft nimmt darin vorhandene Feuchtigkeit auf und tritt als befeuchtete Luft 142 durch die Öffnung 130 aus dem Gehäuse 112 aus.

Es sind auch andere Verfahren bekannt, mit denen Wasser zerstäubt werden kann. Dies kann z.B. dadurch geschehen, dass das Wasser 114 mittels Ultraschall zerstäubt wird oder durch feine Düsen gepresst als feiner Nebel in den Gasraum 120 eingebracht wird.

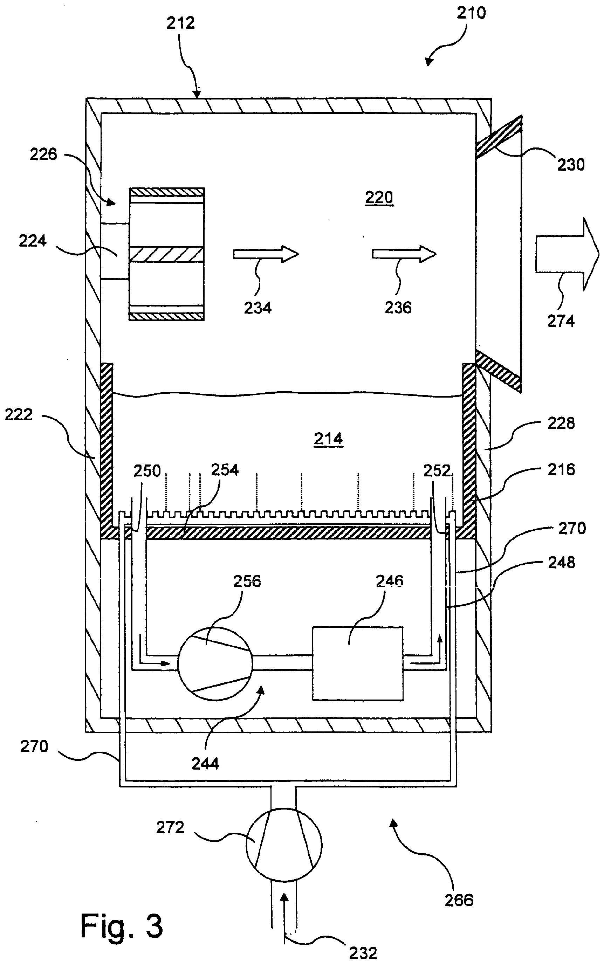

Figur 3 zeigt ein weiteres Ausführungsbeispiel einer Vorrichtung zur Luftaufbereitung in Form eines Luftreinigers 210. In Figur 3 sind der Figur 1 entsprechende Komponenten mit denselben Bezugszeichen zuzüglich 200 gekennzeichnet.

Bei dem Luftreiniger 210 ist das Gebläse 226 vollständig innerhalb des Gasraumes 220 des Gehäuses 212 untergebracht. Die Gehäusewand 222 ist geschlossen, so dass der Gasraum 220 nicht über das Gebläse 226 mit dem Raum außerhalb des Gehäuses 212 in Verbindung steht.

Der Luftreiniger 210 umfasst eine Luftzuführeinrichtung 266, mittels der zu reinigende Luft in Wasser 214 eingebracht wird, das in das Reservoir 216 eingefüllt wurde. Zum Einbringen der Luft ist am Boden 254 des Reservoirs 216 eine Vielzahl von feinen Düsen 268 vorgesehen, denen die Luft über Leitungen 270 mittels eines Gebläses 272 zugeführt wird.

Die Luft strömt durch die Düsen 268 in das Wasser 214 ein, steigt als Luftblasen darin auf und tritt nach oben in den Gasraum 220 ein. Das Wasser 214 nimmt dabei Verunreinigungen aus der Luft auf, so dass die sich im Gasraum 220 des Gehäuses 212 befindliche Luft von Verunreinigungen befreit ist. Das Gebläse 226 fördert die im Gasraum 220 befindliche gereinigte Luft durch die Öffnung 230 aus dem Gehäuse 212 heraus, was in Figur 3 durch den Pfeil 274 angedeutet ist.

Im Gegensatz zu den Luftbefeuchtern 10 und 110 kann bei dem Luftreiniger 210 auch eine andere Flüssigkeit als Wasser vorgesehen sein. Beispielsweise ist eine geeignete Reinigungsflüssigkeit vorzuziehen, in der die von der Luft mitgeführten Verunreinigungen gut löslich sind.

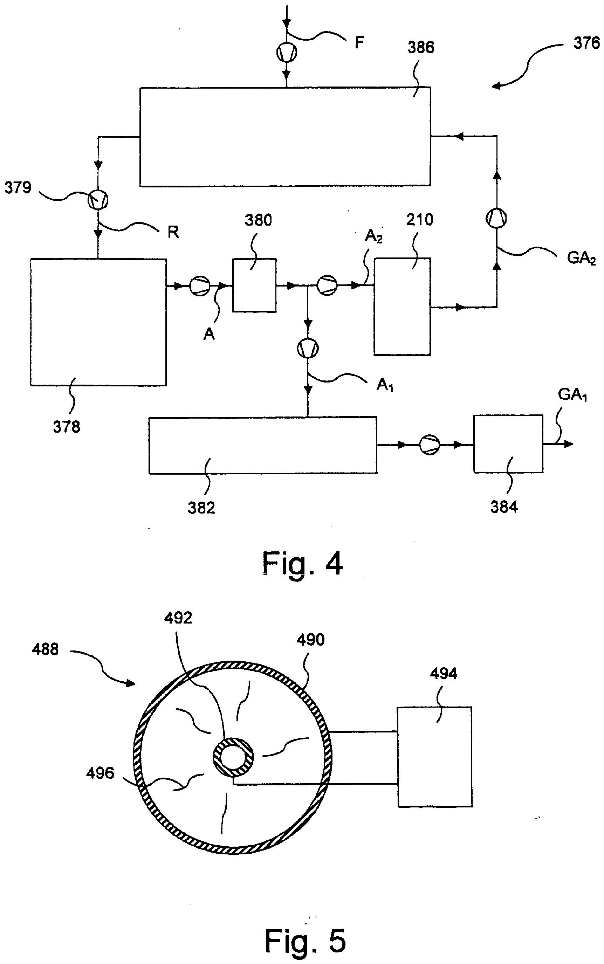

Bei der zu reinigenden Luft kann es sich beispielsweise um Abluft handeln, wie sie bei Behandlungskabinen von Oberflächenbehandlungsanlagen entsteht, bei denen es zu einer Nassabscheidung kommt. Eine solche Oberflächenbehandlungsanlage ist schematisch in Figur 4 gezeigt und insgesamt mit 376 bezeichnet.

Die Oberflächenbehandlungsanlagen 376 umfasst eine Behandlungskabine 378, bei der es sich insbesondere um eine Behandlungskabine zum Lackieren, Beschichten, Trocknen oder auch damit verbundenem Vorbereiten von metallischen oder nichtmetallischen Gegenständen, insbesondere von Fahrzeugkarosserien, handeln kann.

Der Behandlungskabine 378 wird Reinluft R zugeführt, welche die Behandlungskabine 378 als mit Verunreinigungen belastete Abluft A wieder verlässt.

Die Strömungsrichtung der jeweiligen Luft ist in Figur 4 durch Pfeile dargestellt, wobei die Luft jeweils durch lediglich einmal mit dem Bezugszeichen 379 versehene Gebläse gefördert wird.

Die Abluft A wird von der Behandlungskabine 378 zu einem Vorfilter 380 gefördert, von wo ein Teil A₁ der Abluft A zur Entsorgung einer thermischen Nachverbrennungsanlage 382 und von dort über eine Wärmerückgewinnungsanlage 384 als gereinigte Abluft GA₁ der Umwelt zugeführt wird. Das Vorfilter 380 kann auch eine Naßauswascheinrichtung mit einer Venturi-Düse sein, wie dies bei Lackierspritzkabinen üblich ist.

Um wirtschaftlichen und umweltbezogenen Interessen gerecht zu werden, soll die zu entsorgende Abluftmenge so gering wir möglich gehalten werden. Dazu wird ein Teil A₂ der in der Behandlungskabine 378 entstehenden Abluft A in einem Kreislauf in die Behandlungskabine 378 zurückgeführt, wobei dieser zurückgeführte Teil A₂ der Abluft A vor dem Wiedereinbringen in die Behandlungskabine 378 möglichst vollständig gereinigt und in einer Luftmischanlage 386 mit Frischluft F vermischt wird. Diese Mischung aus Frischluft F und dem gereinigten rückgeführten Abluftanteil A₂ wird dann der Behandlungskabine 378 wieder als Reinluft R zugeführt.

Zur Reinigung des zurückgeführten Anteiles A₂ der Abluft A ist vor der Luftmischanlage 386 der Luftreiniger 210 im Kreislauf vorgesehen. Der gereinigte Abluftanteil GA₂ aus dem Luftreiniger 210 wird der Luftmischanlage 386 zugeführt.

Beim Durchtritt der Abluft A₂ durch die Flüssigkeit 214 im Reservoir 216 des Luftreinigers 210 wird die Flüssigkeit 214 stark kontaminiert, was zu einer starken Keimbildung führen kann. Durch die Elektroporationseinrichtung 246 in der Umwälzeinrichtung 244 des Luftreinigers 210 wird diese Keimbildung stark vermindert, wodurch die Flüssigkeit 214 länger zur Reinigung der Abluft A₂ verwendet werden kann. Dies wiederum ist aus wirtschaftlicher und umwelttechnischer Sicht wünschenswert, da die Flüssigkeit 214 mit relativ hohem Aufwand entsorgt werden muss, wenn sie nicht mehr verwendet werden kann. Bei einer Verkeimung der Flüssigkeit 214 liegt der Zeitpunkt, zu dem die Flüssigkeit 214 ausgetauscht werden muss, deutlich vor dem Ende ihrer maximalen Aufnahmekapazität bezüglich der in der Abluft A₂ enthaltenen Verunreinigungen.

Gegebenenfalls können im Kreislauf des Abluftanteils A₂ noch weitere und auch anders geartete Reinigungsstufen vorgesehen sein, welche aus Gründen der Übersichtlichkeit hier nicht dargestellt sind.

Figur 5 zeigt einen Querschnitt durch wesentliche Teile einer Elektroporationseinrichtung 488, mit der sich zusätzlich Koronarentladungen erzeugen lassen. In einem ersten Rohr 490 ist koaxial ein zweites Rohr 492 mit kleinerem Durchmesser als das erste Rohr 490 angeordnet. Die beiden Rohre 490, 492 bilden die Elektroden der Elektroporationseinrichtung 488. Die Rohre 490, 492 sind mit einem Impulsgenerator 494 verbunden, mit dem sich Hochspannungsimpulse erzeugen lassen.

Fließt eine zu entkeimende Flüssigkeit durch den Zwischenraum zwischen den beiden Rohren 490, 492, so kommt es bei der Erzeugung von ausreichend hohen Feldstärken zwischen den Rohren 490, 492 zur Ausbildung von Koronarentladungen, die in Figur 5 mit Linien 496 angedeutet sind. Die Koronarentladungen 496 verstärken die Entkeimung der durch den Zwischenraum fließenden Flüssigkeit. In Folge der Koronaentladungen 496 entstehen nämlich in der Flüssigkeit freie Radikale und andere chemisch aggressive Stoffe wie etwa H₂O₂, welche auf chemisch-biologischem Wege die Keime zusätzlich angreifen.

Die Elektroporationseinrichtung 488, durch welche Koronarentladungen erzeugbar sind, kann in allen oben beschriebenen Vorrichtungen zur Luftaufbereitung 10, 110, 210 eingesetzt werden.

## Patentansprüche

1. Vorrichtung zur Luftaufbereitung mit
a) wenigstens einem mit einer Flüssigkeit (14; 114; 214) befüllbaren Reservoir (16; 116; 216);
b) einer Luftfördereinrichtung (26; 126; 226, 266); und
c) einer Kontakteinrichtung (38; 158; 266), welche dafür sorgt, dass die aufzubereitende Luft (32; 132; 232) zu deren Aufbereitung mit der Flüssigkeit (14; 114; 214) in Kontakt kommt;
wobei
d) eine Umwälzeinrichtung (44; 144; 244) vorgesehen ist, durch welche Flüssigkeit (14; 114; 214) in dem Reservoir (16; 116; 216) in einem Kreislauf aus dem Reservoir (16; 116; 216) heraus und wieder in dieses hinein förderbar ist;
und
e) in dem Kreislauf eine Einrichtung (46; 146; 246; 488) zum Zwecke der Entkeimung der Flüssigkeit (14; 114; 214) vorgesehen ist,
**dadurch gekennzeichnet, daß**
f) die Einrichtung (46; 146; 246; 488) zum Zwecke der Entkeimung der Flüssigkeit eine Einrichtung (46; 146; 246; 488) zum mechanisch-physikalischen Öffnen von Zellmembranen ist.

2. Vorrichtung nach Anspruch 1, **dadurch gekennzeichnet,**
**dass** die Einrichtung (46; 146; 246; 488) zum mechanisch-physikalischen Öffnen von Zellmembranen eine Elektroporationseinrichtung (46; 146; 246; 488) ist.

3. Vorrichtung nach Anspruch 2, **dadurch gekennzeichnet,**
**dass** die Betriebsparameter der Elektroporationseinrichtung (46; 146; 246; 488) während des Betriebs der Vorrichtung (10; 110; 210) einstellbar sind.

4. Vorrichtung nach Anspruch 2 oder 3, **dadurch gekennzeichnet, dass** in der Elektroporationseinrichtung (488) Koronarentladungen erzeugbar sind.

5. Vorrichtung nach Anspruch 1, **dadurch gekennzeichnet,**
**dass** die Einrichtung zum mechanisch-physikalischen Öffnen von Zellmembranen eine Kavitationseinrichtung ist, welche die Flüssigkeit derart beschleunigt, dass durch Kavitation hervorgerufene Druckstöße die Zellmembranen öffnen.

6. Vorrichtung nach einem der vorhergehenden Ansprüche,
**dadurch gekennzeichnet, dass** die Kontakteinrichtung (38) eine Verdunstungsfläche (38) aufweist.

7. Vorrichtung nach Anspruch 6, **dadurch gekennzeichnet,**
**dass** die Verdunstungsfläche (38) eine teilweise in die Flüssigkeit (14) im Reservoir (16) tauchende Vlies- oder Filtermatte (38) ist.

8. Vorrichtung nach einem der Ansprüche 1 bis 5, **dadurch**
**gekennzeichnet, dass** die Kontakteinrichtung (158), eine Zerstäubereinrichtung (158) ist.

9. Vorrichtung nach Anspruch 8, **dadurch gekennzeichnet,**
**dass** die Zerstäubereinrichtung (158) eine rotierende Zerstäubungsplatte (164) aufweist.

10. Vorrichtung nach Anspruch 8, **dadurch gekennzeichnet,**
**dass** die Zerstäubereinrichtung eine Ultraschallquelle aufweist.

11. Vorrichtung nach Anspruch 8, **dadurch gekennzeichnet,**
**dass** die Zerstäubereinrichtung Düsen und eine Pumpe aufweist, mit der die Flüssigkeit durch die Düsen pumpbar ist.

12. Vorrichtung nach einem der Ansprüche 1 bis 5, **dadurch**
**gekennzeichnet, dass** die aufzubereitende Luft (232) mittels einer Luftzuführeinrichtung (266) in die Flüssigkeit (214) im Reservoir (216) einbringbar ist.

13. Vorrichtung nach Anspruch 12, **dadurch gekennzeichnet,**
**dass** die Luftzuführeinrichtung (266) eine Vielzahl von am Boden (254) der Seitenwand und/oder des Reservoirs (216) angeordnete Düsen (268) aufweist.

14. Vorrichtung nach einem der Ansprüche 1 bis 5, **dadurch**
**gekennzeichnet, daß** die aufzubereitende Luft mit der Flüssigkeit in gleicher Fließrichtung durch eine Düse führbar ist.

15. Oberflächenbehandlungsanlage, insbesondere zum Lackieren, Beschichten, Trocknen und damit verbundenem Vorbereiten von metallischen oder nichtmetallischen Gegenständen, mit wenigstens einer Behandlungskabine (378), bei welcher mit Verunreinigungen belastete Abluft (A) anfällt, die der Behandlungskabine (378) in einem Kreislauf nach vorheriger Aufbereitung wenigstens teilweise (A₂) wieder zugeführt wird,
**dadurch gekennzeichnet, dass**
in dem Kreislauf eine Vorrichtung (210) nach einem der Ansprüche 12 bis 14 vorgesehen ist.

## Claims

1. An apparatus for air treatment having
a) at least one reservoir (16; 116; 216) which can be filled with a liquid (14; 114; 214);
b) an air-conveying device (26; 126; 226, 266); and
c) a contact device (38; 158; 266) which ensures that for the treatment of the air to be treated (32; 132; 232) the air comes into contact with the liquid (14; 114; 214);
wherein
d) a circulating device (44; 144; 244) is provided, by which liquid (14; 114; 214) in the reservoir (16; 116; 216) can be conveyed in a circuit out of the reservoir (16; 116; 216) and back into the latter;
and
e) a device (46; 146; 246; 488) for the purpose of sterilizing the liquid (14; 114; 214) is provided in the circuit,
**characterized in that**
f) the device (46; 146; 246; 488) for the purpose of sterilizing the liquid is a device (46; 146; 246; 488) for mechanico-physical opening of cell membranes.

2. The apparatus according to Claim 1, **characterized in that** the device (46; 146; 246; 488) for mechanico-physical opening of cell membranes is an electroporation device (46; 146; 246; 488).

3. The apparatus according to Claim 2, **characterized in that** the operating parameters of the electroporation device (46; 146; 246; 488) are adjustable during the operation of the apparatus (10; 110; 210).

4. The apparatus according to Claim 2 or 3, **characterized in that** corona discharges are generatable in the electroporation device (488).

5. The apparatus according to Claim 1, **characterized in that** the device for mechanico-physical opening of cell membranes is a cavitation device which accelerates the liquid in such a way that pressure surges caused by cavitation open the cell membranes.

6. The apparatus according to one of the preceding Claims, **characterized in that** the contact device (38) comprises an evaporation surface (38).

7. The apparatus according to Claim 6, **characterized in that** the evaporation surface (38) is a fleece mat or filter mat (38) partially immersing in the liquid (14) in the reservoir (16).

8. The apparatus according to one of Claims 1 to 5, **characterized in that** the contact device (158) is an atomizing device (158).

9. The apparatus according to Claim 8, **characterized in that** the atomizing device (158) comprises a rotating atomizing plate (164).

10. The apparatus according to Claim 8, **characterized in that** the atomizing device comprises an ultrasound source.

11. The apparatus according to Claim 8, **characterized in that** the atomizing device comprises nozzles and a pump by which the liquid is pumpable through the nozzles.

12. The apparatus according to one of Claims 1 to 5, **characterized in that** the air to be treated (232) is introducible into the liquid (214) in the reservoir (216) by means of an air supply device (266).

13. The apparatus according to Claim 12, **characterized in that** the air supply device (266) has a multiplicity of nozzles (268) arranged at the bottom (254) of the side wall and/or of the reservoir (216).

14. The apparatus according to one of Claims 1 to 5, **characterized in that** the air to be treated is conductable through a nozzle with the liquid in the same flow direction.

15. Surface treatment installation, in particular for painting, coating, drying and associated preparation of metallic or non-metallic objects, having at least one treatment booth (378), in which exhaust air laden with impurities (A) is generated which is at least partly (A₂) fed back to the treatment booth (378) in a circuit after prior treatment,
**characterized in that**
an apparatus (210) according to one of Claims 12 to 14 is provided in the circuit.

## Revendications

1. Dispositif de traitement de l'air comportant
a) au moins un réservoir (16 ; 116 ; 216) pouvant être rempli d'un liquide (14 ; 114 ; 214) ;
b) un moyen de transport d'air (26 ; 126 ; 226 ; 266) ; et
c) un moyen de mise en contact (38 ; 158 ; 266) qui fait en sorte que l'air à traiter (32 ; 132 ; 232) entre en contact avec le liquide (14 ; 114 ; 214) pour son traitement ;
dans lequel
d) un moyen de circulation (44 ; 144 ; 244) est prévu, par lequel le liquide (14 ; 114 ; 214) présent dans le réservoir (16 ; 116 ; 216) peut être transporté hors du réservoir (16 ; 116 ; 216) et ramené dans celui-ci dans un circuit ;
et
e) un moyen (46 ; 146 ; 246 ; 488) destiné à désinfecter le liquide (14 ; 114 ; 214) est prévu dans le circuit,
**caractérisé en ce que**
f) le moyen (46 ; 146 ; 246 ; 488) destiné à désinfecter le liquide est un moyen (46 ; 146 ; 246 ; 488) permettant l'ouverture mécanico-physique de membranes cellulaires.

2. Dispositif selon la revendication 1, **caractérisé en ce que** le moyen (46 ; 146 ; 246 ; 488) permettant l'ouverture mécanico-physique de membranes cellulaires est un moyen d'électroporation (46 ; 146 ; 246 ; 488).

3. Dispositif selon la revendication 2, **caractérisé en ce que** les paramètres de fonctionnement du moyen d'électroporation (46 ; 146 ; 246 ; 488) sont réglables pendant le fonctionnement du dispositif (10 ; 110 ; 210).

4. Dispositif selon la revendication 2 ou 3, **caractérisé en ce que** des décharges corona peuvent être générées dans le moyen d'électroporation (488).

5. Dispositif selon la revendication 1, **caractérisé en ce que** le moyen permettant l'ouverture mécanico-physique de membranes cellulaires est un moyen de cavitation qui accélère le liquide de telle sorte que des coups de bélier provoqués par cavitation ouvrent les membranes cellulaires.

6. Dispositif selon l'une des revendications précédentes, **caractérisé en ce que** le moyen de mise en contact (38) présente une surface d'évaporation (38).

7. Dispositif selon la revendication 6, **caractérisé en ce que** la surface d'évaporation (38) est un mat non tissé ou filtrant (38) partiellement immergé dans le liquide (14) présent dans le réservoir (16).

8. Dispositif selon l'une des revendications 1 à 5, **caractérisé en ce que** le moyen de mise en contact (158) est un moyen d'atomisation (158).

9. Dispositif selon la revendication 8, **caractérisé en ce que** le moyen d'atomisation (158) présente une plaque d'atomisation rotative (164).

10. Dispositif selon la revendication 8, **caractérisé en ce que** le moyen d'atomisation présente une source d'ultrasons.

11. Dispositif selon la revendication 8, **caractérisé en ce que** le moyen d'atomisation présente des buses et une pompe avec laquelle le liquide peut être pompé à travers les buses.

12. Dispositif selon l'une des revendications 1 à 5, **caractérisé en ce que** l'air à traiter (232) peut être introduit dans le liquide (214) présent dans le réservoir (216) par l'intermédiaire d'un moyen d'alimentation en air (266).

13. Dispositif selon la revendication 12, **caractérisé en ce que** le moyen d'alimentation en air (266) présente une pluralité de buses (268) disposées sur le fond (254) de la paroi latérale et/ou du réservoir (216).

14. Dispositif selon l'une des revendications 1 à 5, **caractérisé en ce que** l'air à traiter peut être guidé à travers une buse avec le liquide et dans le même sens d'écoulement.

15. Installation de traitement de surface, en particulier pour la peinture, le revêtement, le séchage et la préparation associée d'objets métalliques ou non métalliques, comportant au moins une cabine de traitement (378), dans laquelle de l'air sortant (A) contaminé par des impuretés est produit, lequel est ramené au moins en partie (A₂) à la cabine de traitement (378) dans un circuit après traitement préalable,
**caractérisé en ce**
**qu'**un dispositif (210) selon l'une des revendications 12 à 14 est prévu dans le circuit.
